(19) Europäisches Patentamt
European Patent Office
Office européen des brevets

(11) Publication number: **0 249 984 B1**

(12) **EUROPEAN PATENT SPECIFICATION**

(45) Date of publication of patent specification: **08.01.92**

(51) Int. Cl.⁵: **C08F 10/08**, C08F 4/649

(21) Application number: **87108800.1**

(22) Date of filing: **19.06.87**

Divisional application 90114726.4 filed on 19/06/87.

(54) **Process for producing butene-1 polymer.**

(30) Priority: **20.06.86 JP 144093/86**
**29.08.86 JP 203262/86**

(43) Date of publication of application:
**23.12.87 Bulletin 87/52**

(45) Publication of the grant of the patent:
**08.01.92 Bulletin 92/02**

(84) Designated Contracting States:
**BE CH DE FR GB IT LI NL SE**

(56) References cited:
**EP-A- 0 135 358**
**GB-A- 901 945**
**US-A- 4 256 866**

(73) Proprietor: **IDEMITSU PETROCHEMICAL CO. LTD.**
**1-1, Marunouchi 3-chome Chiyoda-ku**
**Tokyo 100(JP)**

(72) Inventor: **Yamawaki, Takashi**
**20-11, Sakuradai 4-chome**
**Ichihara-shi Chiba-ken(JP)**
Inventor: **Imabayashi, Hideki**
**892 Anagasaki**
**Ichihara-shi Chiba-ken(JP)**
Inventor: **Tanaka, Akira**
**2326 Anegasaki**
**Ichihara-shi Chiba-ken(JP)**
Inventor: **Funabashi. Hideo**
**979 Anegasaki**
**Ichihara-shi Chiba-ken(JP)**
Inventor: **Ohnishi, Rikuo**
**216 Imatsuasayama**
**Ichihara-shi Chiba-ken(JP)**

(74) Representative: **TER MEER - MÜLLER - STEINMEISTER & PARTNER**
**Mauerkircherstrasse 45**
**W-8000 München 80(DE)**

EP 0 249 984 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

Background of the Invention

This invention relates to a process for producing a butene-1 polymer used as material for molded products such as films, and pipes, and more particularly, it relates to a process for the production of a butene-1 polymer of good stereoregularity and of high molecular weight in the presence of a highly active catalyst in a high yield.

Hitherto, there have been known processes for the production of olefin polymers which employ a highly active catalyst comprising a combination of a solid catalyst component containing magnesium, titanium, a halogen and an electron donor as essential ingredients with an electron donating compound such as organoaluminum compound, ester, or organosilicone compound. (cf. Japanese Patent Unexamined Publication (Laid-open) Nos. 1004303/80, 115301/81, 63312/82 and 6205/84).

From GB-A-901 945 a process of polymerizing α-olefins comprising contacting them with a catalyst comprising a tri-alkylaluminum, a titanium halide and a tertiary organic phosphine, arsine or stibine is known. An α-olefin polymerization process is also described in US-A-4 256 866, comprising a catalyst wherein minor, effective amounts of a sterically hindered 5- or 6-membered cyclic ether is added to decrease the amount of low-molecular weight or amorphous polymer produced. From EP-A-0 135 358 a random 1-butene copolymer is known obtained by copolymerizing 1-butene and propylene in the presence of a catalyst prepared from a titanium catalyst component containing magnesium, titanium, halogen and a diester as essential ingredients, an organoaluminum compound and an organic silicon compound having a Si-O-C bond.

However, most of these processes can not completely omit the cleaning step for removal of atactic polymers or the step for removal ashes. Furthermore, the catalyst activity is not satisfactory and besides further improvements in properties of resulting polymers such as stereoregularity and molecular weight have been demanded.

A process has also been known to use a phoshpite as electron donating compound in catalyst activity and stereoregularity of polymers are also insufficient.

As proposals for the production of highly crystalline polybutene-1 polymers among olefin polymers, there have been many processes in which solution polymerization or slurry polymerization is carried out using titanium trichloride as a component of catalyst. However, it is expected that if butene-1 polymer can be produced by gas phase polymerization, not only simplification of process, but also reduction of production cost can be attained. Thus, there have been some proposals which indicate possibility of production of butene-1 polymer by gas phase polymerization.

However, there have been various problems for industrially carrying out the processes of these proposals.

For example, butene-1 polymer is higher in affinity to hydrocarbon solvents as compared with polyethylene or polypropylene. Therefore, when catalyst component is supplied to gas phase polymerization system, polymers agglomerate with each other due to a small amount of entrained solvent. As a result, stable operation or working of apparatus for long time becomes difficult.

Further, when gas phase polymerization is carried out using the conventionally widely used catalysts having titanium trichloride (Japanese Patent Unexamined Publication (Laid-open) No. 192716/85) or catalysts having magnesium chloride (Japanese Patent Unexamined Publication (Laid-open) No. 6205/84), catalyst activity is low and stereoregularity of resulting butene-1 polymer is insufficient and thus, merit of gas phase polymerization could not be efficiently utilized.

SUMMARY OF THE INVENTION

It is an object of this invention to provide a process for producing, in high yields, a butene-1 polymer of high stereoregularity and high molecular weight using a highly active catalyst.

Another object of this invention is to provide a process for production of a butene-1 polymer of high stereoregularity by gas phase polymerization.

Still another object of this invention is to provide a process for production of a butene-1 polymer less in content of catalyst residues.

Still another object of this invention is to provide a process for production of a butene-1 polymer which can be appropriately molded into articles such as pipes, etc. under stable operating conditions.

The gist of this invention which solves above problems is a process for producing a butene-1 polymer by homopolymerization of butene-1 or copolymerization of butene-1 with other α-olefins in the presence of

a catalyst obtained from a solid catalyst component (A) obtained from a magnesium compound, a titanium compound, and an electron donor, an organoaluminum compound (B) and an electron donating compound (C), wherein the electron donating compound is an organophosphorus compound represented by the following general formula (1) :

$PR^1_m R^2_n X_{3-(m+n)}$ (1)

(wherein $R^1$ and $R^2$ each represents an alkyl, cycloalkyl or aryl group of 1-10 carbon atoms, X represents a halogen atom and m and n are real numbers which satisfy $0<m+n\leqq3$).

DETAILED DESCRIPTION OF THE INVENTION

The catalysts used in the process of this invention are highly active polymerization catalysts obtained from a solid catalyst component (A) obtained from a magnesium compound, a titanium compound, and an electron donor, an organoaluminum compound (B) and a specific organophosphorus compound as an electron donating compound (C) and they can be prepared in the following manners.

RE: Solid catalyst component(A):

Said solid catalyst component(A) is prepared by contacting a magnesium compound (A-1), a halogenated titanium compound (A-2) and an electron donor(A-3).

As examples of said magnesium compound (A-1), mention may be made of magnesium oxide, magnesium hydroxide, hydrotalcite, carboxylic acid salts of magnesium, magnesium dialkoxide, aryloxymagnesium, alkoxymagnesium halides, aryloxymagnesium halides, magnesium dihalides, organomagnesium compounds, and reaction products of organomagnesium compounds with an electron donor, halosilane, alkoxysilane, silanol and aluminum compound.

Of the above magnesium compounds, a magnesium dialkoxide is preferred.

Suitable magnesium dialkoxides have the following general formula (2):

$Mg(OR^3)_t(OR^4)_{2-t}$ (2)

(wherein $R^3$ and $R^4$ which may be identical or different each represents an alkyl, group of 1-10 carbon atoms cycloalkyl group or aryl group and t is a real number of 0-2).

Typical examples of the magnesium dialkoxides are as follows:

$Mg(-OCH_3)_2$, $Mg(-OC_2H_5)_2$,
$Mg(-OC_3H_7)_2$, $Mg(-OC_4H_9)_2$,
$Mg(-OC_6H_{13})_2$, $Mg(-OC_8H_{17})_2$,

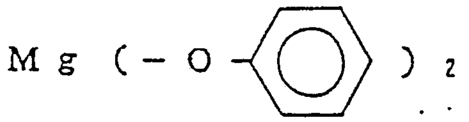, 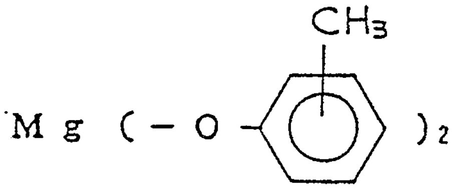

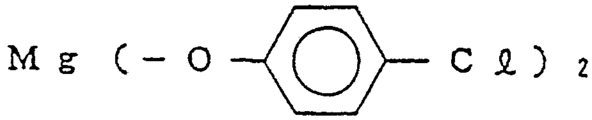

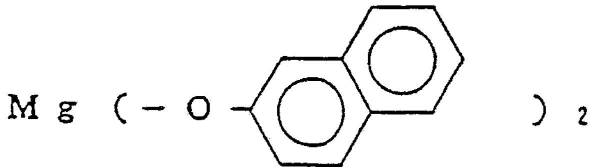,

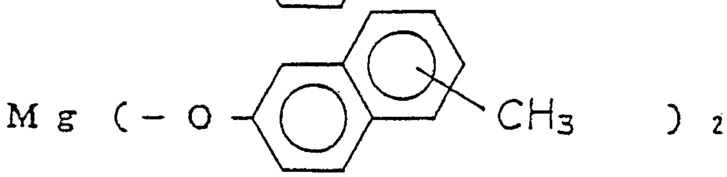,

$Mg(-OCH_3)(-OC_2H_5)$,

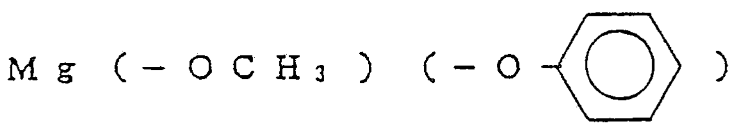,

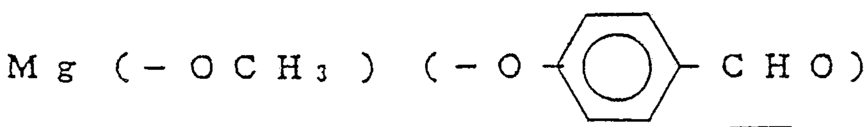,

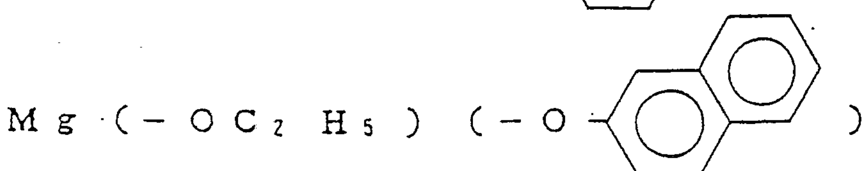,

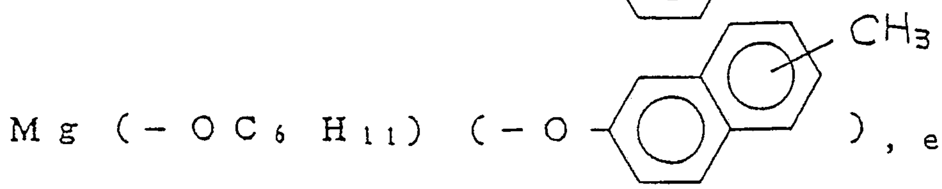, etc.

These magnesium dialkoxides may be used alone or in combination of two or more.

Among them, magnesium dialkoxides in which $R^3$ and $R^4$ are lower alkyl groups are preferred and magnesium dimethoxide and magnesium diethoxide are especially preferred.

As said titanium compound (A-2) which is one of the starting materials for the solid catalyst component (A), mention may be made of, for example, the following compounds:

Titanium tetrahalides such as $TiCl_4$, and $TiI_4$;
alkoxytitanium trihalides such as $Ti(OCH_3)Cl_3$, $Ti(OC_2H_5)Cl_3$, $(n\text{-}C_4H_9O)TiCl_3$, and $Ti(OC_2H_5)Br_3$;
alkoxytitanium dihalides such as $Ti(OCH_3)_2Cl_2$. Ti $(OC_2H_5)_2Cl_2$, $(n\text{-}C_4H_9O)_2TiCl_2$, and $Ti(OC_3H_7)_2Cl_2$;
trialkoxytitanium monohalides such as $Ti(OCH_3)_3Cl$, $Ti(OC_2H_5)_3Cl$, $(n\text{-}C_4H_9O)_3TiCl$, and $Ti(OCH_3)_3Br$;

tetraalkoxytitanium such as $Ti(OCH_3)_4$, $Ti(OC_2H_5)_4$, and $Ti(n\text{-}C_4H_9O)_4$.

These may be used alone or in combination of two or more.

Halides of tetravalent titanium are especially preferred as the titanium compounds (A-2).

Of these halides of tetravalent titanium, preferred are those of high halogen content and especially preferred is titanium tetrachloride.

As the electron donor (A-3) which is a starting material for the solid catalyst component (A), there may be used organic compounds containing oxygen, nitrogen, phosphorus or sulfur.

The electron donors (A-3) include, for example, amines, amides, ketones, nitriles, phosphines, phosphoramides, esters, ethers, thioethers, thioesters, acid anhydrides, acid halides, acid amides, aldehydes, and organic acids.

As typical examples thereof, mention may be made of organic acids such as aromatic carboxylic acids, e.g., benzoic acid, and p-oxybenzoic acid; acid anhydrides such as succinic anhydride benzoic anhydride, and p-toluic anhydride.; ketones of 3-15 carbon atoms such as acetone, methyl ethyl ketone, methyl isobutyl ketone, acetophenone, benzophenone, and benzoquinone; aldehydes of 2-15 carbon atoms such as acetaldehyde, propinaldehyde, octylaldehyde, benzaldehyde, tolualdehyde, and naphthylaldehyde; esters of 2-18 carbon atoms, e.g., monoesters such as methyl formate, methyl acetate, ethyl acetate, vinyl acetate, propyl acetate, octyl acetate, cyclohexyl acetate, ethyl propionate, ethyl valerate, methyl chloroacetate, ethyl dichloroacetate, methyl methacrylate, ethyl crotonate, ethyl pivalate, dimethyl maleate, ethyl cyclohexanecarboxylate, methyl benzoate, ethyl benzoate, propyl benzoate, butyl benzoate, octyl benzoate, cyclohexyl benzoate, phenyl benzoate, benzyl benzoate, methyl toluylate, ethyl toluylate, amyl toluylate, ethyl anisate, ethyl ethoxybenzoate, ethyl p-butoxybenzoate, ethyl o-chlorobenzoate and ethyl naphthoate, aromatic diesters such as dimethyl phthalate, diethyl phthalate, dipropyl phthalate, diisobutyl phthalate, methylethyl phthalate, methylpropyl phthalate, methylisobutyl phthalate, ethylpropyl phthalate, ethylisobutyl phthalate, propylisobutyl phthalate, dimethyl terephthalate, diethyl terephthalate, dipropyl terephthalate, diisobutyl terephthalate, methylethyl terephthalate, methylpropyl terephthalate, methylisobutyl terephthalate, ethylpropyl terephthalate, ethylisobutyl terephthalate, propylisobutyl terephthalate, dimethyl isophthalate, diethyl isophthalate, dipropyl isophthalate, diisobutyl isophthalate, methylethyl isophthalate, methylpropyl isophthalate, methylisobutyl isophthalate, ethylpropyl isophthalate, ethylisobutyl isophthalate and propylisobutyl isophthalate and $\gamma$-butyrolactone,$\delta$-valerolactone, coumalin, phthalide, and ethylene carbonate; acid halides of 2-15 carbon atoms such as acetyl chloride, benzyl chloride, toluic acid chloride, and anisic acid chloride; ethers of 2-20 carbon atoms such as methyl ether, ethyl ether, isopropyl ether, n-butyl ether, amyl ether, tetrahydrofuran, anisole, diphenyl ether, and ethylene glycol butyl ether; acid amides such as acetamide, benzamide, and toluylamide; amines such as tributylamine, N,N'-dimethylpiperazine, tribenzylamine, aniline, pyridine, picoline, and tetramethylethylenediamine; nitriles such as acetonitrile, benzonitrile, and tolunitrile.

Of these electron donors, especially preferred are esters, ethers, ketones and acid anhydrides and further especially preferred are alkyl esters of aromatic carboxylic acids, for example, alkyl esters (1-4 carbon atoms) of aromatic carboxylic acids such as benzoic acid, p-methoxybenzoic acid, p-ethoxybenzoic acid, and toluic acid, aromatic diesters such as diisobutyl phthalate. Furthermore, aromatic ketones such as benzoquinone, aromatic, carboxylic acid anhydrides, ethers such as ethylene glycol butyl ether are also preferred.

Re: Preparation of solid catalyst component (A)

Solid catalyst component (A) used when the specific organophosphorus compound represented by the general formula (1) is used as electron donating compound (C) can be prepared by the methods disclosed in Japanese Patent Unexamined Publication (Laid-Open) Nos. 43094/78, 135102/80, 135103/80, 811/81, 11908/81 and 18606/81.

Several examples of preparation of solid catalyst component (A) are explained below.

1) Magnesium compound (A-1) or complex compound of a magnesium compound and elctron donor (A-3) with or without being ground is reacted with titanium compound (A-2) which is liquid under the reaction condition in the presence or absence of an electron donor, or a grinding aid. In this case, said electron donor is used at least once.

2) Liquid magnesium compound (A-1) having no reducibility is reacted with liquid titanium compound (A-2) in the presence of electron donor (A-3) to precipitate a solid titanium composite.

3) The product obtained in the above 1) or 2) is reacted with titanium compound (A-2).

4) The product obtained in the above 1) or 2) is reacted with electron donor (A-3) and titanium compound (A-2).

5) Magnesium compound (A-1) or a complex compound of magnesium compound (A-1) and electron donor (A-3) is ground in the presence or absence of an electron donor, grinding aid, etc. and in the presence of titanium compound (A-2) and then treated with a halogen or a halogen compound. In this case, said electron donor (A-3) is used at least once.

6) The compound obtained in the above 1)-4) is treated with a halogen or a halogen compound.

When the specific heterocyclic compound represented by the general formula (2) is used as electron donating compound (C), solid catalyst component (A) can be produced, for example, by contacting simultaneously or stepwise said magnesium dialkoxide, said electron donating compound and a halide of tetravalent titanium in a hydrocarbon solvent.

Preparation methods disclosed, for example, in Japanese Patent Unexamined Publication Nos. 166205/81, 63309/82, 190004/82, 300407/82, 47003/83, Japanese Patent Application No. 43670/86, etc. may also be included as suitable methods for preparation of said solid catalyst component (A) of this invention.

Further, solid catalyst component (A) can be prepared by contacting said electron donor, said halide of tetravalent titanium and a solid comprising said magnesium dialkoxide which is carried on an oxide of an element of Group II-IV of the periodic table, for example, silicon oxide, magnesium oxide, and aluminum oxide, preferably silicon oxide or a composite oxide containing at least one oxide of element of Group II-IV of the periodic table, for example, silica-alumina, in a solvent at 0-200°C, preferably 10-150°C for 2 minutes-24 hours.

Furthermore, the solid catalyst component (A) can be prepared by contacting said magnesium dialkoxide with said electron donor and then reacting at least twice a halide of tetravalent titanium with said magnesium dialkoxide which has been contacted with said electron donor. (cf. method disclosed in Japanese Patent Unexamined Publication No. 63309/82).

In preparation of the solid catalyst component, as said solvent, there may be used organic solvents inert to the magnesium dialkoxides, the electron donors and the halides of tetravalent titanium, for example, aliphatic hydrocarbons such as hexane, heptane, etc., aromatic hydrocarbons such as benzene, toluene, etc. and halogenated hydrocarbons such as mono and polyhalides of saturated or unsaturated aliphatic, alicyclic and aromatic hydrocarbons having 1-12 carbon atoms.

Re: Composition of the solid catalyst component (A)

The composition of the solid catalyst component (A) is 1-100, preferably 5-70 in magnesium/titanium atomic ratio, 3-200, preferably 4-100 in halogen/titanium ratio and 0.1-10 in electron donor/titanium (molar ratio).

Re; Organoaluminum compound (B)

The organoaluminum compound (B) used in this invention has no special limitation and those represented by the following general formulas may be widely used:

$AlR^5{}_vX_{3-v}$
$Al_2R^5{}_3X_3$

(wherein $R^5$ is an alkyl, cycloalkyl or aryl group having 1-10 carbon atoms, v is a real number of 1-3 and X is a halogen atom such as chlorine, and bromine).

As examples of the organoaluminum compounds, mention may be made of trialkylaluminum compounds such as trimethylaluminum, triethylaluminum, triisopropylaluminum, triisobutylaluminum, and trioctylaluminum, dialkylaluminum monohalides such as diethylaluminum monochloride, diisopropylaluminum monochloride, diisobutylaluminum monochloride, and dioctylaluminum monochloride and alkylaluminum sesquihalides such as ethylaluminum sesquichloride. These may be used alone or in combination of two or more. Of these compounds, preferred are trialkylaluminums and especially preferred is triisobutylaluminum.

Re: Electron donating compound(C)

One of the important points of this invention is to use as the electron donating compound (C) an organophosphorus compound represented by the general formula (1) :

$PR^1_m R^2_n X_{3-(m+n)}$     (1)

(wherein $R^1$ and $R^2$ each represents an alkyl, cycloalkyl or aryl group of 1-10 carbon atoms, X is a halogen atom and m and n are real numbers which satisfy $0<m+n\leq 3$).

As examples of the organophosphorus compounds, mention may be made of diphenylphosphine chloride, phenylbutylphosphine chloride, dibutylphosphine chloride, dipropylphosphine chloride, phenylpropylphosphine chloride, diethylphosphine chloride, phenylethylphosphine chloride, phenylphosphine dichloride, butylphosphine dichloride, propylphospine dichloride, ethylphosphine dichloride, triphenylphosphine, trihexylphosphine, tripentylphosphine, tributylphosphine, diphenylbutylphosphine, diphenylpentylphosphine, diphenylhexylphosphine, phenyldibutylphosphine, phenyldipentylphosphine, and phenyldihexylphosphine.

These organophosphorus compounds may be used alone or in combination of two or more.

Of these organophosphorus compounds, preferred are those having phenyl group and halogen and combinations of these preferred compounds with triphenylphosphine, for example, diphenylphosphine chloride, phenylbutylphosphine chloride, phenylpropylphosphine chloride, phenylethylphosphine chloride, and phenylphosphine dichloride and especially preferred are combinations of triphenylphosphine with a compound selected from the group consisting of diphenylphosphine chloride, phenylbutylphosphine chloride, phenylphosphine dichloride and diphenylphosphine chloride.

If electron donating compounds other than said organophosphorus compounds, for example, phosphites, silane compounds and aromatic esters are used, catalytic activity is low and stereoregularity of resulting polymers is also low.

Re: Composition of catalyst

Composition of each ingredient of the catalyst for polymerization of olefins is as follows. The solid catalyst component (A): 0.0005-1 mmol in terms of titantium atom for 1 1 of reaction volume; the organoaluminum compound (B): 0.1-1000, preferably 1-500 in aluminum/titanium atomic ratio; and the organophosphorous compound electron donating compound (C): 1-500, preferably 5-200 in phosphorus/titanium atomic ratio.

Re: Polymerization

This invention relates to a process for production of butene-1 homopolymer or copolymer which comprises homopolymerizing butene-1 or copolymerizing butene-1 with other $\alpha$-olefins in the presence of the above-mentioned catalyst.

For polymerization, there may be used any of gas phase polymerization, bulk polymerization with use of liquid monomer as a solvent, or slurry polymerization. From the point of catalytic activity, gas phase polymerization and bulk polymerization are especially preferred.

When gas phase polymerization method is used, the step for recovery of polymerization solvent can be omitted and the step for drying resulting polymer can be greatly simplified and besides the tendency of agglomeration of the resulting polymer is further diminished.

When homopolymer is produced, this may be produced by feeding, only butene-1 to a polymerizer and effecting polymerization at 40-90°C under 9.81-294.3 $N/cm^2G$ (1-30 $kg/cm^2G$), preferably 9.81-147.2 $N/cm^2G$ (1-15 $kg/cm^2G$).

When butene-1 random copolymer is produced, copolymerization can be effected by feeding butene-1 and other $\alpha$-olefins to a polymerizer so that butene-1 content in the copolymer is 60-99.5% by weight, preferably 70-98% by weight.

Said other $\alpha$-olefins include, for example, straight chain monoolefins such as propylene, ethylene, hexene-1, and octene-1, branched monoolefins such as 4-methyl-pentene-1 and dienes such as butadiene.

In order to obtain butene-1 polymers having preferable properties, propylene is preferably used as the other $\alpha$-olefins.

When so-called block copolymers are produced by gas phase polymerization method, using the first polymerizer and the second polymerizer connected in series, propylene, etc. are fed with heating to 90°C or lower under a pressure of 9.81-294.3 $N/cm^2G$ (1-30 $kg/cm^2G$) to carry out the first stage polymerization to produce a polymer in an amount of 1-20% by weight of total amount of finally obtained polymer and in the second polymerizer, only butene-1 or butene-1 and other $\alpha$-olefin such as propylene are fed to the reaction product transferred from the first polymerizer or the reaction product of the first stage from which unreacted other olefin such as propylene and other vaporized components are removed as gases by providing a degassing device between the first polymerizer and the second stage polymerizer and the second stage polymerization is effected at 90°C or less and under 9.81-294.3 $N/cm^2G$ (1-30 $kg/cm^2G$) with

keeping the reaction system at fluidized state to produce a copolymer containing 1-30% by weight of the other α -olefin. If necessary, a pre-polymerization of a small amount of the other olefin, e.g., propylene or butene-1 may be effected before the first stage polymerization

Molecular weight of the polymer can be controlled by adjusting hydrogen concentration in the polymerizer. Further, the catalyst may be fed as a suspension in an inert solvent, or in α-olefin.

In the process of this invention, post-treatments after polymerization can be carried out by the conventional methods. That is, in the case of gas phase polymerization, nitrogen stream may be passed through polymer powder discharged from polymerizer after polymerization to remove olefins contained in the polymer powder. Furthermore, if necessary, the polymer powder may be pelletized by extruders and in this case, a small amount of water, or alcohol may be added to completely deactivate the catalysta. In the case of bulk polymerization method, monomers are completely removed from the polymer discharged from polymerizer after polymerization and then the polymer may be pelletized.

According to this invention, a process for production of butene-1 polymer can be provided which have the following advantages:

1) Since highly active catalysts are used, residual amount of catalysts remaining in the polymerization product can be diminished and a step for removal of catalyst residue from the resulting butene-1 polymer can be omitted.

2) A polymer powder having a high bulk density of at least 0.28 g/cc can be obtained and so this is convenient for powder transportation.

3) The polymer obtained has a (η) of 1.0-7.0 dl/g (decalin solution, 135 °C) and is superior in stereoregularity (I.I.) (insolubles after subjected to Soxhlet extraction with boiling diethyl ether for 6 hours) and creep resistance and so it can be molded into articles of good appearance such as pipe.

4) When gas phase polymerization is employed, a step for recovery of polymerization solvent can be omitted and the step of drying of the resulting polymer can be markedly simplified.

This invention is further illustrated by the following examples and comparative examples.

Example 1

(1) Preparation of solid catalyst component

In a 500 ml three-necked flask were charged 5 g of diethoxymagnesium, 1.1 g of ethyl benzoate and 50 ml of n-heptane under argon stream, followed by addition of 120 ml of titanium tetrachloride and refluxing for one hour with stirring. Then, supernatant liquid was extracted and washed twice with 100 ml of n-heptane of 80 °C, followed by further addition of 120 ml of titanium tetrachloride and refluxing for 30 minutes. After completion of the reaction, washing with n-heptane was continued until no chlorine was detected in the supernatant liquid to obtain a solid catalyst component.

(2) Production of butene-1 polymer

Into a one l stainless steel autoclave was introduced 400 ml of liquid butene-1 and then were introduced 2 mmol of triisobutylaluminum, 0.5 mmol of diphenylphosphine chloride and 0.005 mmol (in terms of titanium atom) of the solid catalyst component obtained in the above (1) in this order. Hydrogen pressure was adjusted to 0,98 $N/cm^2$ (0.1 $kg/cm^2$) and the polymerization was effected at 50 °C for 2 hours to obtain butene-1 polymer.

Polymerization conditions and properties of the polymer obtained are shown in Table 1.

Comparative Example 1

Example 1 was repeated except that 0.8 mmol of ethyl benzoate was used in place of 0.5 mmol of diphenylphosphine chloride.

Polymerization conditions and properties of the polymer obtained are shown in Table 1.

Example 2 and 3

Example 1 was repeated except that the conditions as shown in Table 1 were employed.

Example 4

0.02 mmol of the same solid catalyst component as used in Example 1, 1 mmol of triisobutylaluminum and 0.8 mmol of diphenylphosphine chloride were mixed. The mixture was introduced into a 2 l stainless steel autoclave and reaction was effected by gas phase polymerization method at a 1-butene pressure of 29.4 N/cm² (3 kg/cm²) and a hydrogen pressure of 0,2 N/cm² (0.02 kg/cm²) and at a

Table 1

| | Components of Catalyst | | | | Polymerization conditions | | | | Results of polymerization | | |
|---|---|---|---|---|---|---|---|---|---|---|---|
| | Electron donor in component(A) | | Electron donating compound(C) | | Polymerization method | Hydrogen pressure | Temperature | Time | Activity | I.I. | [η] |
| | Kind | m mol/g catalyst | Kind | m mol | | N/cm² (kg/cm²) | °C | hr | kg-PB/g-Ti | % | dl/g |
| Example 1 | Ethyl benzoate | 0.67 | $P(Ph)_2Cl$ | 0.5 | Bulk | 0,98 (0.1) | 50 | 2 | 298 | 97.2 | 3.07 |
| Comparative Example 1 | Ethyl benzoate | 0.67 | Ethyl benzoate | 0.8 | Bulk | 0.98 (0.1) | 50 | 2 | 202 | 95.3 | 2.46 |
| Example 2 | Diisobutyl phthalate | 0.52 | $P(Ph)_2Cl$ | 0.05 | Bulk | 0.98 (0.1) | 50 | 2 | 440 | 97.1 | 3.18 |
| Example 3 | Diisobutyl phthalate | 0.52 | $P(Ph)_2Cl$<br>$P(Ph)_3$ | 0.03<br>0.9 | Bulk | 0.98 (0.1) | 50 | 2 | 315 | 98.4 | 3.36 |
| Example 4 | Ethyl benzoate | 0.67 | $P(Ph)_2Cl$ | 0.8 | gas phase | 0.1 (0.01) | 50 | 4 | 192 | 97.0 | 3.62 |
| Example 5 | Ethyl benzoate | 0.67 | $P(Ph)_2Cl$<br>$P(Ph)_3$ | 0.3<br>1.2 | gas phase | 0.1 (0.01) | 50 | 4 | 151 | 97.8 | 4.01 |
| Example 6 | Diisobutyl phthalate | 0.52 | $P(Ph)_2Cl$ | 0.14 | gas phase | 0.1 (0.01) | 50 | 4 | 322 | 96.7 | 4.30 |
| Example 7 | Diisobutyl phthalate | 0.52 | $P(Ph)C_4H_9Cl$ | 0.2 | gas phase | 0.2 (0.02) | 50 | 4 | 350 | 96.6 | 3.10 |
| Example 8 | Diisobutyl phthalate | 0.52 | $P(Ph)Cl_2$ | 0.2 | gas phase | 0.2 (0.02) | 50 | 4 | 298 | 97.0 | 3.63 |
| Example 9 | Diisobutyl phthalate | 0.52 | $P(Ph)_2Cl$<br>$P(Ph)_3$ | 0.2<br>0.8 | gas phase | 0.2 (0.02) | 50 | 4 | 230 | 97.6 | 3.54 |
| Comparative Example 2 | Ethyl benzoate | 0.67 | Ethyl benzoate | 0.4 | gas phase | 0.2 (0.02) | 50 | 4 | 121 | 96.5 | 2.56 |
| Comparative Example 3 | Diisobutyl phthalate | 0.52 | Diphenyldimethoxysilane | 0.2 | gas phase | 0.2 (0.02) | 50 | 4 | 311 | 96.9 | 1.92 |
| Comparative Example 4 | Diisobutyl phthalate | 0.52 | Triethyl phosphite | 0.4 | gas phase | 0.2 (0.02) | 50 | 4 | 155 | 92.9 | 1.78 |

I.I. : Extraction retention after the obtained polymer was Soxhlet extracted with diethyl ether for 6 hours.

[η] : Intrinsic viscosity measured in decalin solution at 135°C.

polymerization temperature of 50 °C for 4 hours.

Polymerization conditions and properties of the polymer obtained are shown in Table 1.

Example 5-9 and Comparative Examples 2-4

Example 2 was repeated except that the conditions as shown in Table 1 were employed.

Example 10

Example 7 was repeated except that a mixed gas of butene-1/propylene = 0.85/0.15 (volume ratio) was fed with keeping the pressure at 29.4 $N/cm^2$ (3 $kg/cm^2$) and reaction was effected for 4 hours by gas phase random polymerization method. Thus obtained butene-1 copolymer had a propylene content of 14.2% by weight and had an intrinsic viscosity ($\eta$) of 2.98 dl/g and an activity of 386 kgPB/g-Ti.

## Claims

1. A process for producing a butene-1 polymer by homopolymerization of butene-1 or copolymerization of butene-1 with other $\alpha$-olefins in the presence of a catalyst consisting essentially of a solid catalyst component (A) obtained from a magnesium compound, an electron donor and a titanium compound, an organoaluminum compound (B) and an electron donating compound (C), **characterized in** that the electron donating compound is an organophosphorous compound represented by the following general formula:

   $PR^1_mR^2_nX_{3-(m+n)}$

   wherein $R^1$ and $R^2$ each represent an alkyl, cycloalkyl or aryl group of 1-10 carbon atoms, X represents a halogen atom, and m and n are real numbers which satisfy $0<m+n\leqq3$.

2. The process as claimed in claim 1, **characterized in** that the magnesium compound is a magnesium dialkoxide.

3. The process as claimed in claim 2, **characterized in** that the magnesium dialkoxide is magnesium diethoxide.

4. The process as claimed in claim 1, **characterized in** that the titanium compound is a tetravalent titanium halide.

5. The process as claimed in claim 4, **characterized in** that the tetravalent titanium halide is titanium tetrachloride.

6. The process as claimed in claim 1, **characterized in** that the electron donor is an aromatic carboxylic acid ester.

7. The process as claimed in claim 1, **characterized in** that the organoaluminum compound has the general formula:

   $AlR^5_vX_{3-v}$ or $AlR^5_vX_{3-v}$

   wherein $R^5$ is an alkyl, cycloalkyl or aryl group or 1-10 carbon atoms, v is a real number of 1-3 and X is a halogen atom.

8. The process as claimed in claim 7, **characterized in** that the organoaluminum compound is triisobutylaluminum.

9. The process as claimed in claim 1, **characterized in** that the organophosphorous compound is at least one compound selected from the group consisting of organophosphorous compounds having phenyl group and halogen atom, and triphenylphosphine.

10. The process as claimed in claim 9, **characterized in** that the organophosphorous compound is at least one organophosphorous compound selected from the group consisting of diphenylphosphine chloride, phenylbutylphosphine chloride, phenylphosphine dichloride, diphenylphosphine chloride and triphenylphosphine chloride.

**Revendications**

1. Procédé de production de polymère de butène-1 par homopolymérisation du butène-1 ou par copolymérisation du butène-1 avec d'autres α-oléfines en présence d'un catalyseur consistant essentiellement en un composant catalytique solide (A) obtenu à partir d'un composé de magnésium, d'un donneur d'électrons et d'un composé de titane, un composé organo-aluminium (B) et un composé donneur d'électrons (C), caractérisé en ce que le composé donneur d'électrons est un composé organo-phosphoré représenté par la formule générale suivante:

   $PR^1_mR^2_nX_{3-(m+n)}$

   dans laquelle $R^1$ et $R^2$ représentent chacun un groupe alkyle, cycloalkyle ou aryle de 1 à 10 atomes de carbone, X représente un atome d'halogène, et m et n sont des noires réels qui satisfont $O<m+n\leqq3$.

2. Procédé selon la Revendication 1, caractérisé en ce que le composé de magnésium est un dialcoolate de magnésium.

3. Procédé selon la Revendication 2, caractérisé en ce que le dialcoolate de magnésium est le diéthylate de magnésium.

4. Procédé selon la Revendication 1, caractérisé en ce que le composé de titane est un halogénure de titane.

5. Procédé selon la Revendication 4, caractérisé en ce que l'halogénure de titane est le tétrachlorure de titane.

6. Procédé selon la Revendication 1, caractérisé en ce que le donneur d'électrons est un ester d'acide carboxylique aromatique.

7. Procédé selon la Revendication 1, caractérisé en ce que le composé organo-aluminium répond à la formule générale:

   $AlR^5_vX_{3-v}$ ou $AlR^5_vX_{3-v}$

   dans laquelle $R^5$ est un groupe alkyle, cycloalkyle ou aryle de 1 à 10 atomes de carbone, v est un nombre réel de 1 à 3 et X est un atome d'halogène.

8. Procédé selon la Revendication 7, caractérisé en ce que le composé organo-aluminium est triisobutylaluminium.

9. Procédé selon la Revendication 1, caractérisé en ce que le composé organo-phosphoré est au moins un composé choisi dans le groupe comprenant les composés organo-phosphorés ayant un groupe phényle et atome d'halogène, et la triphénylphosphine.

10. Procédé selon la Revendication 9, caractérisé en ce que le composé organo-phosphoré est au moins un composé organo-phosphoré choisi dans le groupe comprenant le chlorure de diphénylphosphine, le chlorure de phénylbutylphosphine, le dichlorure de phénylphosphine et le chlorure de triphénylphosphine.

**Patentansprüche**

1. Verfahren zur Herstellung eines Buten-1-Polymers durch Homopolymerisation von Buten-1 oder durch Copolymerisation von Buten-1 mit anderen α-Olefinen in Gegenwart eines Katalysators, der im

wesentlichen aus einem festen Katalysatorbestandteil (A), der aus einer Magnesiumverbindung, einem Elektronendonor und einer Titanverbindung erhalten worden ist, einer aluminiumorganischen Verbindung (B) und einer Elektronendonatorverbindung (C) besteht, **dadurch gekennzeichnet,** daß die Elektronendonatorverbindung eine phosphororganische Verbindung der folgenden allgemeinen Formel

$PR^1{}_mR^2{}_nX_{3-(m+n)}$

ist, in der $R^1$ und $R^2$ jeweils Alkyl-, Cycloalkyl- oder Arylgruppen mit 1 bis 10 Kohlenstoffatomen, X ein Halogenatom und m und n reale Zahlen bedeuten, welche die Beziehung $0 < m + n \leqq 3$ erfüllen.

**2.** Verfahren nach Anspruch 1, **dadurch gekennzeichnet,** daß die Magnesiumverbindung ein Magnesiumdialkoxid ist.

**3.** Verfahren nach Anspruch 2, **dadurch gekennzeichnet,** daß das Magnesiumdialkoxid Magnesiumdiethoxid ist.

**4.** Verfahren nach Anspruch 1, **dadurch gekennzeichnet,** daß die Titanverbindung ein vierwertiges Titanhalogenid ist.

**5.** Verfahren nach Anspruch 4, **dadurch gekennzeichnet,** daß das vierwertige Titanhalogenid Titantetrachlorid ist.

**6.** Verfahren nach Anspruch 1, **dadurch gekennzeichnet,** daß der Elektronendonor ein aromatischer Carbonsäureester ist.

**7.** Verfahren nach Anspruch 1, **dadurch gekennzeichnet,** daß die aluminiumorganische Verbindung der allgemeinen Formel

$AlR^5{}_vX_{3-v}$ oder $AlR^5{}_vX_{3-v}$

entspricht, worin $R^5$ eine Alkyl-, Cycloalkyl- oder Arylgruppe mit 1 bis 10 Kohlenstoffatomen, v eine reale Zahl mit einem Wert von 1 bis 3 und X ein Halogenatom bedeuten.

**8.** Verfahren nach Anspruch 7, **dadurch gekennzeichnet,** daß die aluminiumorganische Verbindung Triisobutylaluminium ist.

**9.** Verfahren nach Anspruch 1, **dadurch gekennzeichnet,** daß die phosphororganische Verbindung mindestens eine Verbindung ausgewählt aus der phosphororganische Verbindungen mit Phenylgruppen und Halogenatomen und Triphenylphosphin umfassenden Gruppe ist.

**10.** Verfahren nach Anspruch 9, **dadurch gekennzeichnet,** daß die phosphororganische Verbindung mindestens eine phosphororganische Verbindung ausgewählt aus der Diphenylphosphinchlorid, Phenylbutylphosphinchlorid, Phenylphosphindichlorid, Diphenylphosphinchlorid und Triphenylphosphinchlorid umfassenden Gruppe ist.